# EUROPEAN PATENT SPECIFICATION

(11) **EP 3 260 781 B1**
(45) Date of publication and mention of the grant of the patent: **27.02.2019**
(21) Application number: 17176843.5
(22) Date of filing: 20.06.2017
(51) Int. Cl.: F23R 3/34, F23R 3/06, F23R 3/28

(54) **MULTI-TUBE LATE LEAN INJECTOR**
MAGERGEMISCH - NACHINJEKTOR MIT MEHREREN ROHREN
INJECTEUR PAUVRE TARDIVE À TUBES MULTIPLES

(30) Priority: 22.06.2016 US 201615189708
(43) Date of publication of application: 27.12.2017
(73) Proprietor: General Electric Company, Schenectady, NY 12345 (US)
(72) Inventor: BERRY, Jonathan Dwight, Greenville, SC South Carolina 29615 (US); HUGHES, Michael John, Greenville, SC South Carolina 29615 (US)
(74) Representative: Lee, Brenda

(56) References cited:
- EP-A1- 0 805 308
- EP-A1- 3 171 088
- EP-A2- 1 681 514
- EP-A2- 2 236 935

## Description

### TECHNICAL FIELD

This invention relates generally to a combustion system and, more specifically, to a combustion system that comprises a primary reaction zone and a secondary reaction zone, which includes an injector for injecting a fluid into a stream of combustion products generated within the primary reaction zone.

### BACKGROUND

Fuel is delivered from a fuel source to a combustion section of a gas turbine where the fuel is mixed with air and ignited to generate hot combustion products. The hot combustion products are working gases that are directed to a turbine section where they effect rotation of a turbine rotor. It has been found that the production of NOx gases from the burning fuel in the combustion section can be reduced by providing a secondary combustion zone downstream from a main combustion zone. The fuel/air mixture provided to the secondary combustion zone may be a lean mixture.

### BRIEF SUMMARY

One aspect of the disclosed technology relates to a micromixer injector having a compact arrangement including a plurality of premixing tubes having a spaced-apart configuration at an upstream face of the micromixer and a more densely packed arrangement at a downstream face.
One exemplary but nonlimiting aspect of the disclosed technology relates to a micromixer injector comprising a fuel plenum to receive a supply of fuel; a plurality of premixing tubes extending through the fuel plenum, each tube having an air inlet at an intake end of the tube and an outlet at a discharge end of the tube, the air inlet of each tube being configured to receive a supply of air, each tube having a plurality of fuel holes formed therein to receive the supply of fuel for mixing with the air in the tube; and an upstream face having the inlet of each tube formed therein, and a downstream face having the outlet of each tube formed therein, wherein the air inlet of each tube has a first geometrical shape and the outlet of each tube has a second geometrical shape that is different from the first geometrical shape, and wherein an overall inlet area of the plurality of premixing tubes on the upstream face is larger than an overall outlet area of the plurality of premixing tubes on the downstream face such that the plurality of premixing tubes are relatively spaced-apart at the upstream face and more densely packed at the downstream face.

Another exemplary but nonlimiting aspect of the disclosed technology relates to a combustor section comprising a primary combustion system generating a stream of combustion products; a secondary combustion system located downstream of the primary combustion system, the secondary combustion system including: at least one micromixer injector to deliver a fuel/air mixture into the stream of combustion products, the at least one micromixer injector comprising: a fuel plenum to receive a supply of fuel; a plurality of premixing tubes extending through the fuel plenum, each tube having an air inlet at an intake end of the tube and an outlet at a discharge end of the tube, the air inlet of each tube being configured to receive a supply of air, each tube having a plurality of fuel holes formed therein to receive the supply of fuel for mixing with the air in the tube; and an upstream face having the inlet of each tube formed therein, and a downstream face having the outlet of each tube formed therein, wherein the air inlet of each tube has a first geometrical shape and the outlet of each tube has a second geometrical shape that is different from the first geometrical shape, and wherein an overall inlet area of the plurality of premixing tubes on the upstream face is larger than an overall outlet area of the plurality of premixing tubes on the downstream face such that the plurality of premixing tubes are relatively spaced-apart at the upstream face and more densely packed at the downstream face.

Other aspects, features, and advantages of this technology will become apparent from the following detailed description when taken in conjunction with the accompanying drawings, which are a part of this disclosure and which illustrate, by way of example, principles of this invention.

### BRIEF DESCRIPTION OF THE DRAWINGS

The accompanying drawings facilitate an understanding of the various examples of this technology. In such drawings:
Fig. 1 is a partial cross-sectional side view of a turbomachine in accordance with an example of the disclosed technology;
Fig. 2 is a cross-sectional side view of an example of the combustor of the turbomachine of Fig. 1;
Fig. 3 is an enlarged detail of Fig. 2;
Fig. 4 is a front perspective view of a micromixer slot injector according to an example of the disclosed technology;
Fig. 5 is rear perspective view of the micromixer slot injector of Fig. 4;
Fig. 6 is another rear perspective view of the micromixer slot injector of Fig. 4;
Fig. 7 is a partial rear perspective view of a micromixer according to another example of the disclosed technology;
Fig. 8 is a left side view of the micromixer slot injector of Fig. 4;
Fig. 9 is a right side view of the micromixer slot injector of Fig. 4;
Fig. 10 is a top view of the micromixer slot injector of Fig. 4;
Fig. 11 is a front view of the micromixer slot injector of Fig. 4;
Fig. 12 is a cross-sectional front perspective view along the line 12-12 in Fig. 10;
Fig. 13 is a cross-sectional rear perspective view along the line 13-13 in Fig. 8;
Fig. 14 is a cross-sectional front perspective view along the line 13-13 in Fig. 8;
Fig. 15 is a cross-sectional front perspective view along the line 15-15 in Fig. 11;
Fig. 16 is a cross-sectional front perspective view along the line 16-16 in Fig. 10; and
Fig. 17 is a schematic representation illustrating flow paths of fluids used in the secondary combustion system, in accordance with an example of the disclosed technology.

### DETAILED DESCRIPTION OF THE ILLUSTRATED EMBODIMENTS

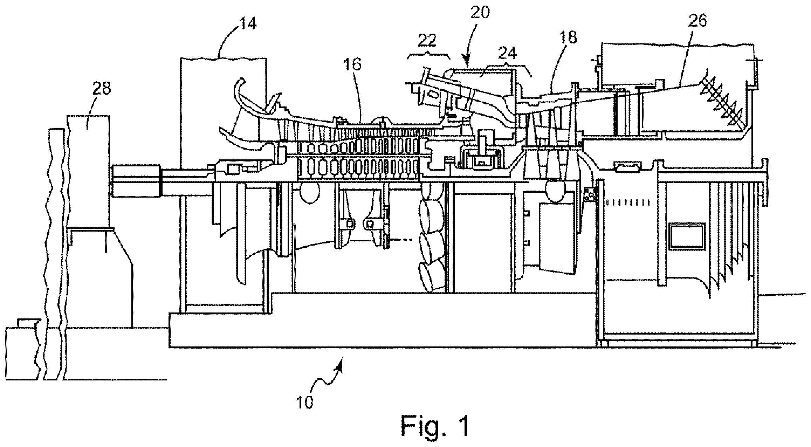

Fig. 1 is a partial cross-sectional side view of a turbomachine 10 in accordance with an embodiment of the disclosed technology. The turbomachine 10 may comprise a primary combustion system 22 and a secondary combustion system 24 including at least one micromixer slot injector 200, (not illustrated in Fig. 1), for injecting a secondary fluid, into a stream of combustion products generated by the primary combustion system 22.

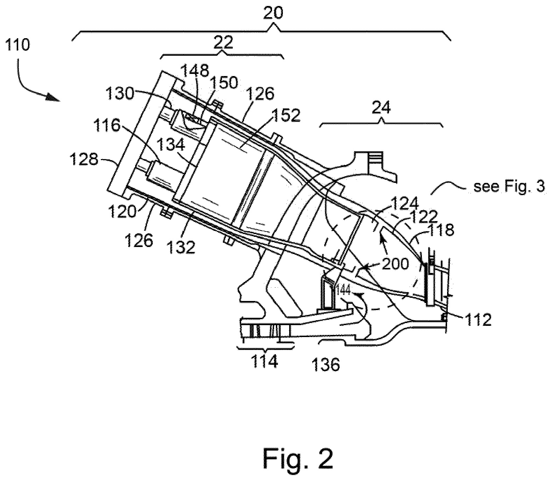

An embodiment of the turbomachine 10 may comprise an inlet section 14; a compressor section 16 downstream from the inlet section 14; a combustion section 20 comprising the primary combustion system 22 downstream from the inlet section 14, and the secondary combustion system 24 downstream from the primary combustion system 22; a turbine section 18 and an exhaust section 26. As illustrated in Fig. 2, for example, the secondary combustion system 24 may comprise at least one micromixer slot injector 200 for injecting a secondary fluid, such as, but not limited to, a fuel and air mixture, into a stream of combustion products flowing from the primary combustion system 22.

Referring again to Fig. 1, the turbomachine 10 may also include a turbine section 18. The turbine section 18 may drive the compressor section 16 and the load 28 through a common shaft connection. The load 28 may be, but is not limited to, an electrical generator, a mechanical drive or the like.

The combustion section 20 may include a circular array of a plurality of circumferentially spaced combustors 110. A fuel and air mixture may be burned in each combustor 110 to produce a stream of combustion products, which may flow through a transition piece 122 and then to a plurality of turbine nozzles 112 of the turbine section 18. A conventional combustor 110 is described in U.S. Pat. No. 5,259,184. For purposes of the present description, only one combustor 110 may be referenced, all of the other combustors 110 arranged about the combustion section 20 may be substantially identical to the illustrated combustor 110.

Although Fig. 1 illustrates a plurality of circumferentially spaced combustors 110 and Fig. 2 shows a cross-section of a combustor 110 that may be considered a can combustor, the disclosed technology may be used in conjunction with other combustor systems including and not limited to annular or can combustor systems.

Fig. 2 is a cross-sectional side view of an embodiment of a combustor 110 of the combustion section 20 in Fig. 1. Fig. 2 illustrates the combustor 110 comprising a primary combustion system 22 and a secondary combustion system 24 within an assembly; as described in U.S. Pat. No. 6,047,550 and U.S. Pat. No. 6,192,688. The combustor 110 comprises a plurality of micromixer slot injectors 200, and a transition piece 122, which generally allows for the generated combustion products to flow to the turbine nozzle 112.

The primary combustion system 22 may include a casing 126, an end cover 128, a plurality of start-up fuel nozzles 130, a plurality of premixing fuel nozzles 116, a cap assembly 134, a flow sleeve 120, and a combustion liner 132 within the flow sleeve 120. An example of a cap assembly 134 is described in U.S. Pat. No. 5,274,991. Combustion in the primary combustion system 22 may occur within the combustion liner 132. Typically, combustion air is directed within the combustion liner 132 via the flow sleeve 120 and enters the combustion liner 132 through a plurality of openings formed in the cap assembly 134. The air may enter the combustion liner 132 under a pressure differential across the cap assembly 134 and mixes with fuel from the start-up fuel nozzles 130 and/or the premixing fuel nozzles 116 within the combustion liner 132. Consequently, a combustion reaction occurs within the combustion liner 132 that releases heat energy that drives the turbine section 18.

High-pressure air from the primary combustion system 22 may enter the flow sleeve 120 and an impingement sleeve 118, from an annular plenum 144. The compressor section 16, represented by a series of vanes, blades, other compressor components 114 and a diffuser 136, supplies this high-pressure air. Each premixing fuel nozzle 116 may include a swirler 148, which may comprise a plurality of swirl vanes 150 that impart rotation to the entering air and allowing for the entering fuel to be distributed within the rotating air stream. The fuel and air then mix in an annular passage within the premix fuel nozzle 116 before reacting within the primary reaction zone 152.

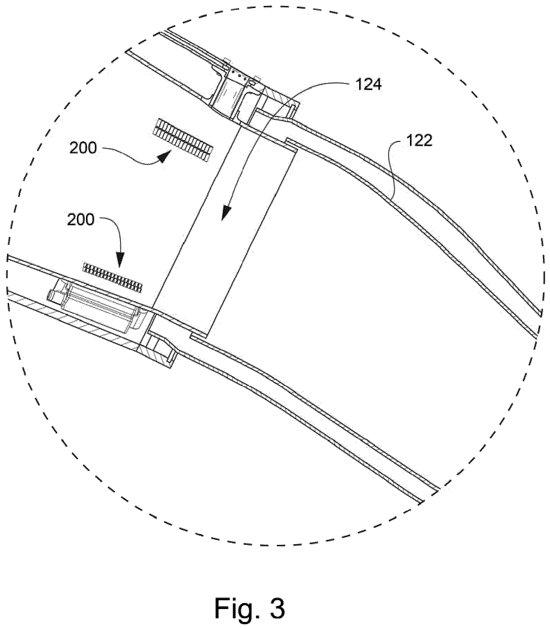

As illustrated in Figs. 2 and 3, a plurality of micromixer slot injectors 200 may penetrate the transition piece 122 or combustion liner 132 and introduce additional fuel mixture into the secondary reaction zone 124 within the combustor 110. The combustion products exiting the primary reaction zone 152 may be at a thermodynamic state that allows for the auto-ignition of the secondary fuel mixture. The resulting secondary hydrocarbon fuel oxidation reactions go to substantial completion in the transition piece 122. An embodiment of the secondary combustion system 24 and micromixer slot injector 200 may allow for burning a fuel different from the fuel burned within the primary combustion system 22. For example, the injector may allow for burning a synthetic fuel, syngas, or the like.

Referring to Figs. 2 and 3, an embodiment of the disclosed technology may function with at least one micromixer slot injector 200, located within the combustion liner 132 or transition piece 122. An alternate embodiment of the disclosed technology may incorporate a plurality of micromixer slot injectors 200 positioned (e.g., circumferentially) in the combustion liner 132 or transition piece 122, as shown in Figs. 2 and 3.

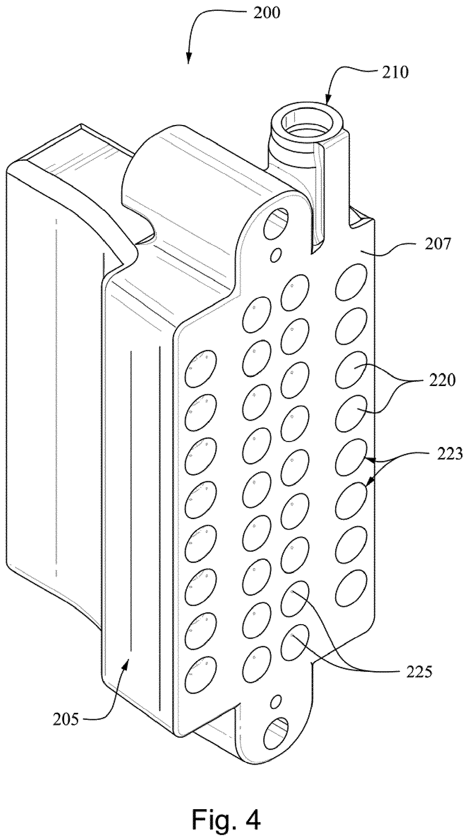

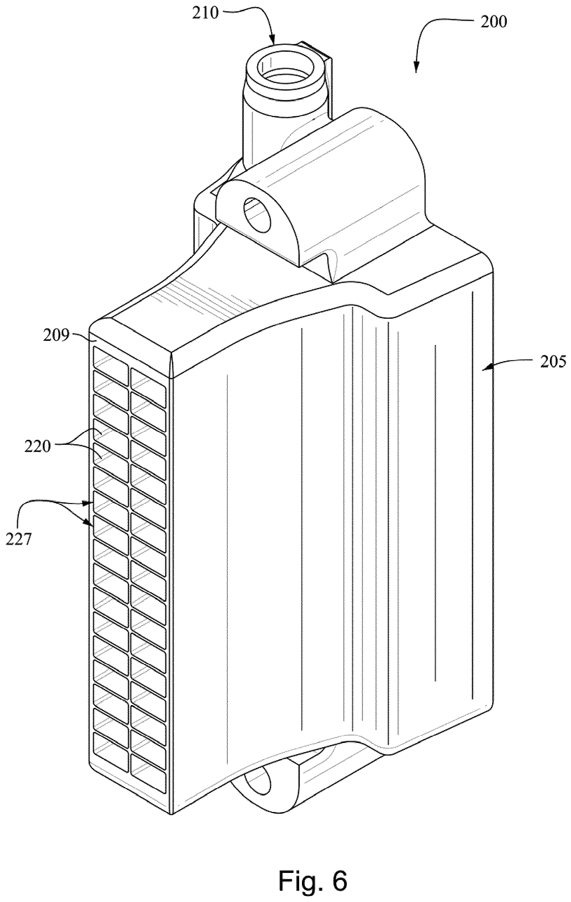

Turning to Figs. 4-6, micromixer slot injector 200 is shown. Micromixer slot injector 200 is configured to receive supplies of air and fuel and to discharge a fuel/air mixture (e.g., a lean fuel/air mixture). Although the micromixer slot injector has a compact arrangement, since there is limited space in the circumferential regions of the combustion liner 132 and transition piece 122 downstream of the primary reaction zone, the configuration of the micromixer slot injector enables the production of a fuel/air mixture with a high degree of fuel/air mixedness. A well-mixed fuel/air stream is preferable in order to minimize the formation of nitrogen oxide (NOx) emissions.

Micromixer slot injector 200 includes a body 205 having an upstream face 207 and a downstream face 209, as shown in Figs. 4-6. A plurality of premixing tubes 220 extend between upstream face 207 and downstream face 209, forming a plurality of corresponding air inlets 223 in the upstream face 207 and a plurality of corresponding outlets 227 in the downstream face. The air inlets 223 are arranged to receive a supply of air (e.g., bled off from compressor section 16).

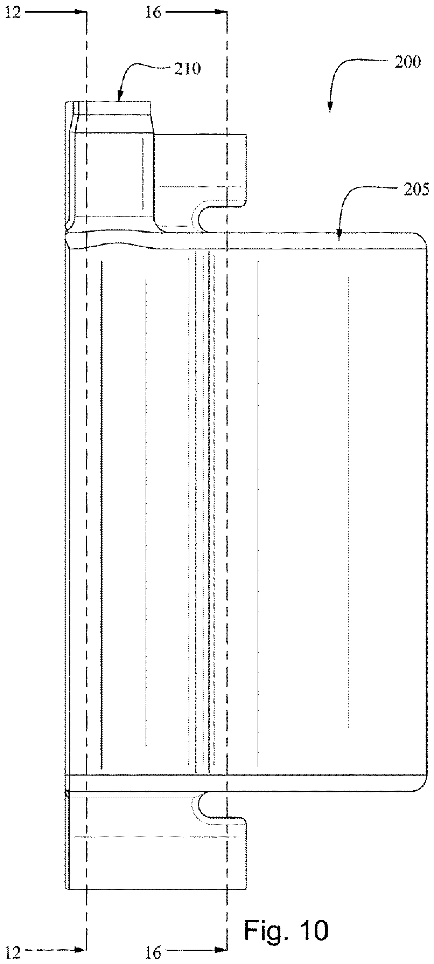

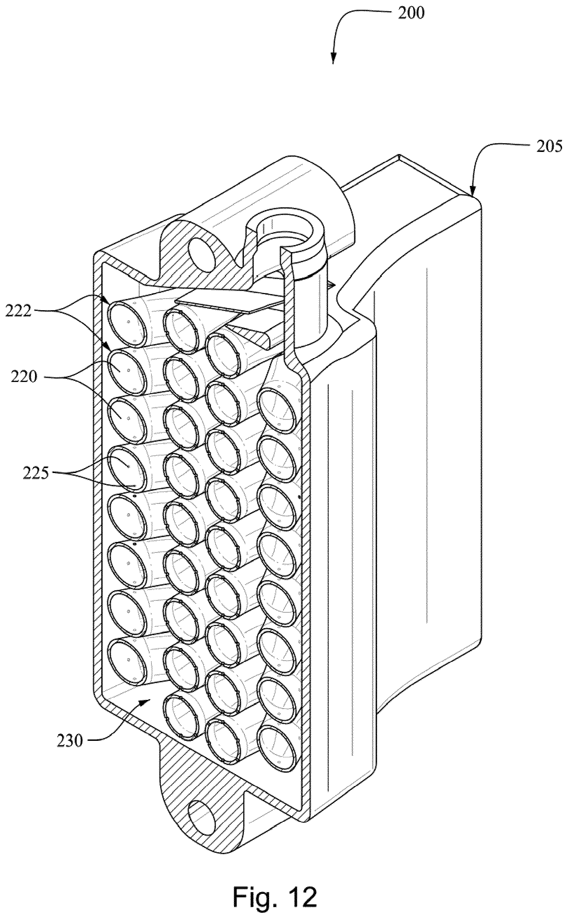

Referring to Figs. 4-6 and 10, a fuel inlet 210 is formed in body 205 and configured to receive a supply of fuel. The fuel inlet is in fluid communication with a fuel plenum 230 within body 205, as best shown in Fig. 12. Fuel in the plenum 230 is received through a plurality of fuel holes 225 in each tube 220 to mix with air in the tubes. The plurality of premixing tubes 220 have a spaced-apart arrangement in the plenum 230 (which is toward the upstream face 207), as can be seen in Fig. 12. This arrangement enables the fuel to flow around all of the tubes so as to be evenly distributed among the tubes, which results in a well-mixed fuel/air stream.

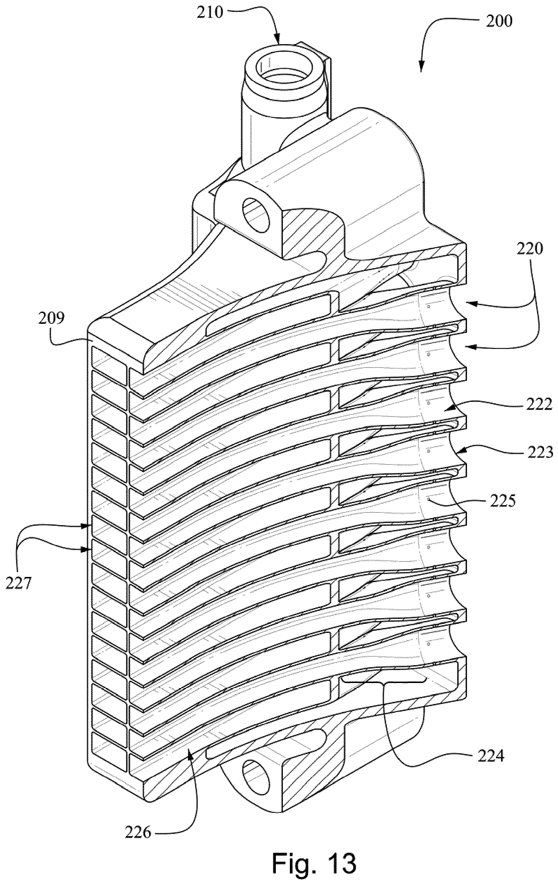

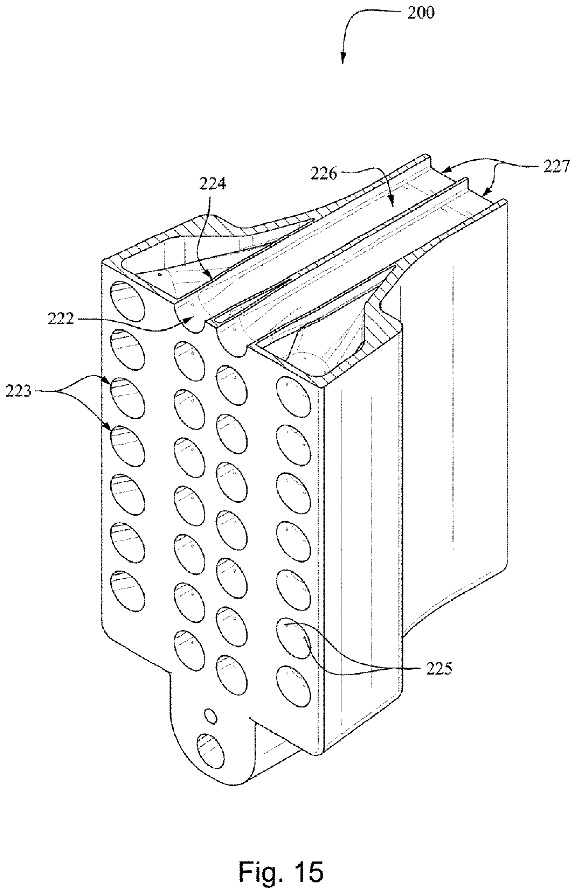

As best seen in Figs. 13-15, each of the plurality of premixing tubes 220 has an intake end 222, a transition portion 224 and a discharge end 226. The intake end 222 includes the air inlet 223 which is formed in the upstream face 207 of body 205. The fuel holes 225 are also preferably formed in the intake ends 222 of the tubes. In the illustrated embodiment, the air inlet 223 of each tube has a non-rectilinear shape (e.g., an arcuate shape such as a circular shape). The non-rectilinear shape of the tubes continues into, and preferably through, the intake ends 222 of the tubes. The non-rectilinear shape facilities the spaced-apart arrangement of the tubes and the provision of a plurality of evenly distributed fuel holes 225 in the tubes.

Still referring to Figs. 13-15, the transition portion 224 of each tube 220 extends between the intake end 222 and the discharge end 226. The transition portion 224 is also the portion of each tube where the tube transitions from the non-rectilinear shape to a non-circular shape (e.g., a rectilinear shape).

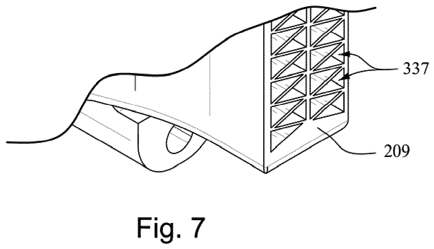

The discharge end 226 of each tube 220 extends from the transition portion 224 to outlet 227 which is formed in the downstream face 209 of the micromixer slot injector, as can be seen in Figs. 13-15. The outlets 227 have a non-circular shape (e.g., a rectilinear shape such as rectangular). The non-circular shape of the outlets 227 facilitates a dense packing of the outlets on the downstream face 209. For example, each tube 220 may be bounded by at least one (e.g., 2 or 3) common wall with an immediately adjacent tube 220 such that no space exists between immediately adjacent tubes. In the illustrated example, each tube 220 (except for the four tubes at the upper and lower ends) has at least three common walls with immediately adjacent tubes. Those skilled in the art will recognize that the outlets could have other non-circular shapes, such as the triangular shaped outlets 337 shown in Fig. 7.

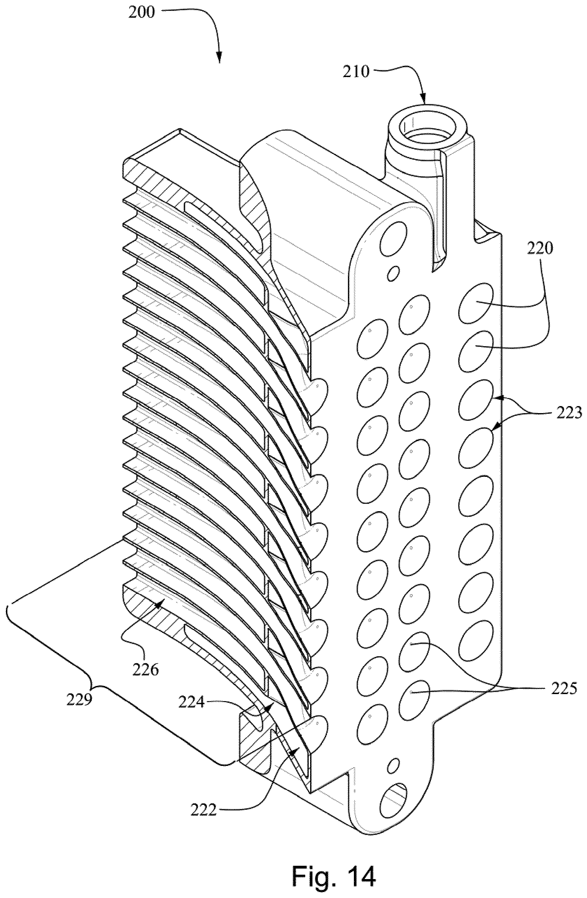

The intake end 222, transition portion 224 and discharge end 226 of each tube form a passageway 229 extending from the air inlet 223 to the outlet 227, as illustrated in Fig. 14. The length of each passageway 229 may be at least 10 times the diameter of the respective tube 220 to allow the fuel/air mixture to achieve sufficient premixing. The diameter of the tube 220 at the air inlet 223 may be between 0.25 and 0.45 inches (e.g., 0.3-0.4 inches). Thus, micromixer slot injector 200 has a compact configuration. However, the arrangement of the air inlets 223 and the outlets 227 of the tubes 220 allow for a scalable configuration; thus, larger and/or smaller configurations are feasible.

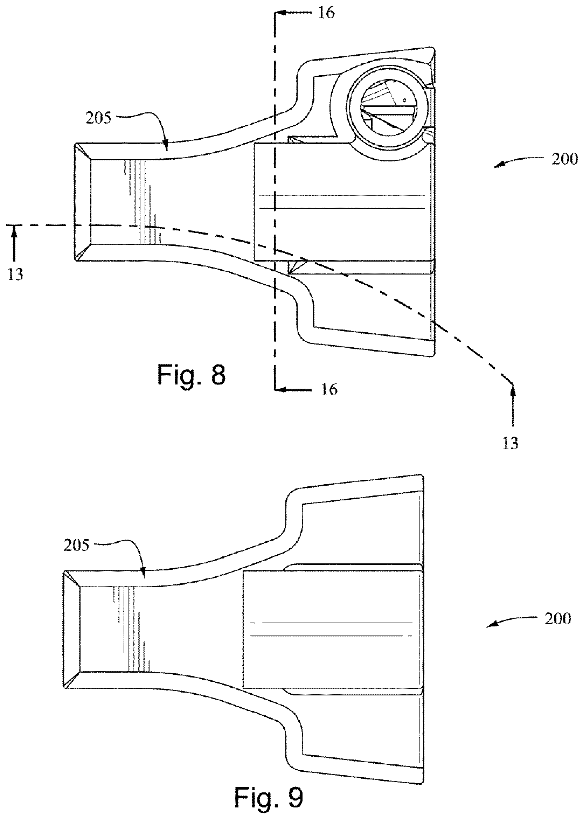

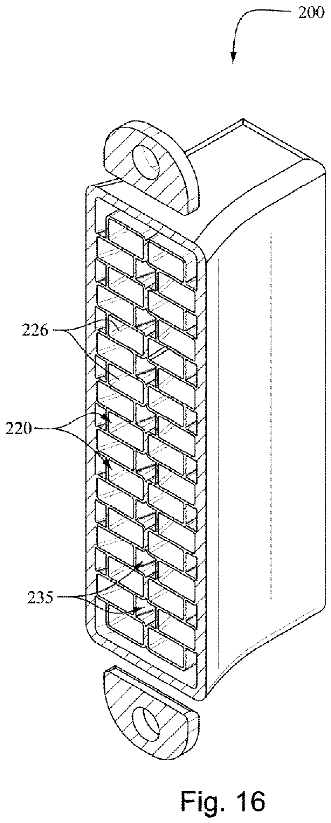

As can be seen in Figs. 4-6, 8, 9 and 13-16, body 205 of micromixer slot injector 200 has a tapering profile from the upstream face 207 to the downstream face 209. That is, the micromixer slot injector tapers from an upstream end where the plurality of premixing tubes 220 are spaced-apart and have a first geometrical shape to a downstream end where the tubes are more densely packed and have a second, different geometrical shape. In Fig. 16, spaces 235 are shown between the discharge ends 226 of the tubes. The spaces 235 are smaller than the spaces between the tubes at the upstream face 207. At the downstream face 209, the spaces 235 are eliminated thereby allowing the outlets 227 of the tubes to be stacked without any wastage of space. Since there are no spaces between the outlets 227, the volume of flow exiting the outlets relative to the overall outlet area 236 (described below) is maximized. Those skilled in the art will recognize that the downstream face 209 could be arranged such that small spaces exist between the tubes.

As can be seen in Figs. 12 and 13, tubes that are arranged side-by-side on the upstream face 207 are stacked vertically at the downstream face 209, resulting in an elongate structure at the downstream face.

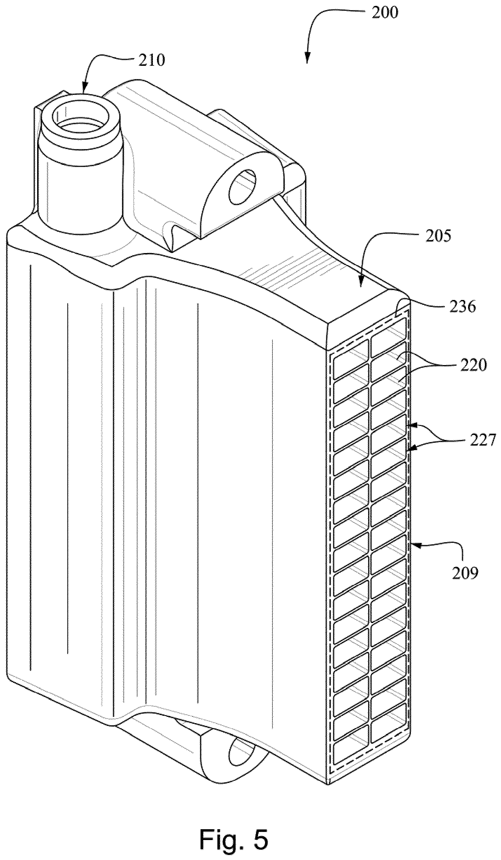

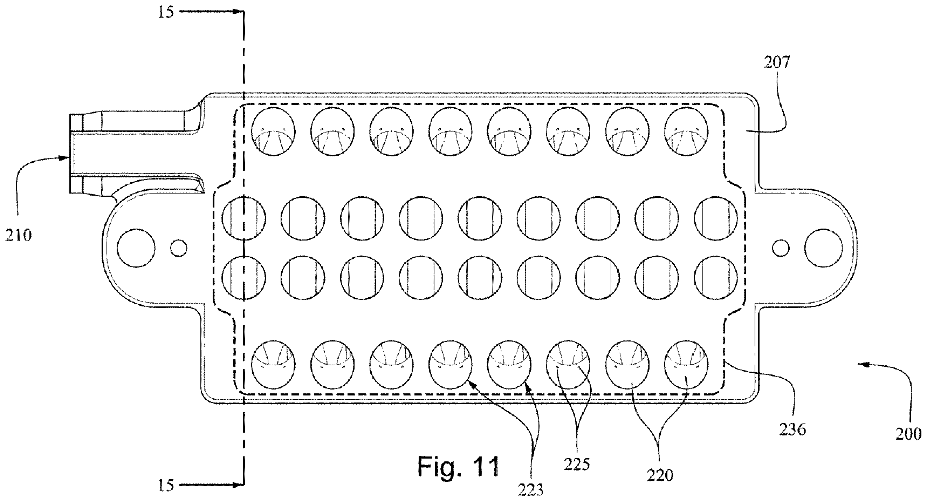

In other words, an overall inlet area 232 (Fig. 11), representing a surface area of upstream face 207 required to accommodate the air inlets 223 of the plurality of premixing tubes 220 in the spaced-apart arrangement, is larger than an overall outlet area 236 (Fig. 5) representing a surface area of downstream face 209 required to accommodate the outlets of the plurality of premixing tubes in the densely paced arrangement. Thus, the overall outlet area 236 on downstream face 209 has an elongate structure that extends along a longitudinal axis of combustor 110. Those skilled in the art will recognize that the overall outlet area 236 may have a shape other than the slot shape formed by the elongate structure of the downstream face 209. For example, the overall outlet area 236 and the downstream face 209 could have a hexagonal shape.

The elongate structure of the overall outlet area 236 facilitates the micromixer slot injector in achieving deep penetration of the fuel/air mixture into the stream of combustion products produced by the primary combustion system. Deep penetration of the fuel/air mixture results in an efficient entrainment of the fuel/air mixture into the stream of combustion products, which minimizes the formation of NOx emissions.

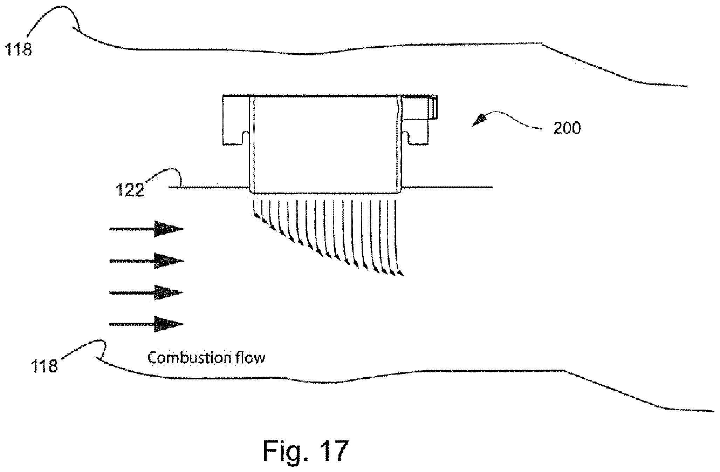

Turning to Fig. 17, it can be seen that outlets 227 that are relatively downstream in the direction of the combustion flow achieve deeper penetration into the combustion flow as compared to more upstream outlets. This occurs because the fuel/air mixture flowing from each relatively upstream outlet acts as a buffer for each downstream outlet enabling the flow of each downstream outlet to be initially somewhat shielded from the combustion flow, thereby permitting progressively deeper penetration into the combustion flow. As a result, micromixer slot injector 200 can be scaled to achieve a desired penetration, since the greater the number of tubes in the micromixer slot injector the greater the length of the overall outlet area 236 in the direction of the combustion flow.

It is noted that micromixer slot injector 200 may be mounted flush or in an inserted arrangement in the combustion liner 132 or transition piece 122. A flush mounting, as shown in Fig. 3, may reduce the amount of heat transferred to the micromixer slot injector from the combustion flow, thereby requiring less energy to cool the micromixer slot injector. Other the other hand, penetration of the fuel/air mixture into the combustion flow may be enhanced by inserting the micromixer slot injector a desired depth into the combustion flow. Overheating of the micromixer slot injector may be prevented by the flow of air and fuel which cool the micromixer slot injector as they pass through. In Fig. 17, micromixer slot injector 200 is shown slightly inserted into the transition piece 122.
While the invention has been described in connection with what is presently considered to be the most practical and preferred examples, it is to be understood that the invention is not to be limited to the disclosed examples, but on the contrary, is intended to cover various modifications and equivalent arrangements included within the scope of the appended claims.

## Claims

1. A combustor section, comprising:
a primary combustion system (22) generating a stream of combustion products; and
a secondary combustion system (24) located downstream of the primary combustion system, **characterized in that** the secondary combustion system includes:
at least one micro mixer injector (200) to deliver a fuel/air mixture into the stream of combustion products, the at least one micromixer injector comprising:
a fuel plenum (230) to receive a supply of fuel;
a plurality of premixing tubes (220) extending through the fuel plenum, each tube having an air inlet (223) at an intake end of the tube and an outlet (227) at a discharge end of the tube, the air inlet of each tube being configured to receive a supply of air, each tube having a plurality of fuel holes formed therein to receive the supply of fuel for mixing with the air in the tube; and
an upstream face (207) having the inlet of each tube formed therein, and a downstream face (209) having the outlet of each tube formed therein,
wherein the air inlet (223) of each tube has a first geometrical shape and the outlet (227) of each tube has a second geometrical shape that is different from the first geometrical shape, and
wherein an overall inlet area (232) of the plurality of premixing tubes on the upstream face is larger than an overall outlet area (236) of the plurality of premixing tubes on the downstream face such that the plurality of premixing tubes are relatively spaced-apart at the upstream face and more densely packed at the downstream face.

2. The combustor section of claim 1, wherein the overall outlet area (236) has an elongate shape extending in a direction of flow of the stream of combustion products.

3. The combustor section of claim 2, wherein the number of premixing tubes (220) in the at least one micro mixer injector corresponds directly to a length of the elongate overall outlet area (236), and a first outlet arranged downstream in the direction of flow of the stream of combustion products relative to a second outlet achieves deeper penetration of the fuel/air mixture into the stream of combustion products.

4. The combustor section of claim 3, wherein the at least one micromixer injector is configured such that the greater the number of premixing tubes (220) in the micromixer injector, the deeper the penetration of the fuel/air mixture into the stream of combustion products.

5. The combustor section of any preceding claim, wherein the downstream face (209) has an elongate structure configured to extend in a direction of flow of the combustion products.

6. The combustor section of any preceding claim, wherein the air inlet (223) of each tube of the plurality of premixing tubes has a non-rectilinear shape.

7. The combustor section of claim 6, wherein the air inlet (223) of each tube of the plurality of premixing tubes has an arcuate shape.

8. The combustor section of any preceding claim, wherein the outlet (227) of each tube of the plurality of premixing tubes has a non-circular shape.

9. The combustor section of claim 8, wherein the outlet (227) of each tube of the plurality of premixing tubes has a rectilinear shape.

10. The combustor section of any of claims 1 to 6, wherein the air inlet (223) of each tube of the plurality of premixing tubes has a circular shape and the outlet of each tube has a rectilinear shape.

11. The combustor section of claim 10, wherein each tube (220) has a transition portion (224) along which the tube transitions from a circular shape to a rectilinear shape.

12. The combustor section of any preceding claim, wherein immediately adjacent tubes of the plurality of premixing tubes (220) are bounded by a common wall at the outlet (227) of each tube such that no space exists between the immediately adjacent tubes at the outlet of each tube.

13. The combustor section of any preceding claim, said at least one micromixer injector further comprising a body (205) having the upstream face (207) at a first end thereof and the downstream face (209) at an opposite second end thereof, the body tapering from the upstream face to the downstream face.

## Patentansprüche

1. Brennkammersektion, umfassend:
ein primäres Verbrennungssystem (22), das einen Strom von Verbrennungsprodukten erzeugt; und
ein sekundäres Verbrennungssystem (24), das stromabwärts des primären Verbrennungssystems gelegen ist, **dadurch gekennzeichnet, dass** das sekundäre Verbrennungssystem enthält:
zumindest einen Mikromischer-Einspritzer (200) zum Abgeben eines Brennstoff/Luft-Gemisches in den Strom von Verbrennungsprodukten, der zumindest eine Mikromischer-Einspritzer umfassend:
einen Brennstoffsammelraum (230) zum Aufnehmen einer Brennstoffversorgung;
eine Vielzahl von Vormischröhren (220), die sich durch den Brennstoffsammelraum erstrecken, wobei jede Röhre einen Lufteinlass (223) an einem Ansaugende der Röhre und einen Auslass (227) an einem Abgabeende der Röhre aufweist, wobei der Lufteinlass jeder Röhre gestaltet ist, eine Luftversorgung aufzunehmen, wobei jede Röhre eine Vielzahl von Brennstofflöchern aufweist, die zur Aufnahme der Brennstoffversorgung zum Mischen mit der Luft in der Röhre ausgebildet ist; und
eine stromaufwärtige Fläche (207), wobei der Einlass jeder Röhre darin gebildet ist, und eine stromabwärtige Fläche (209), wobei der Auslass jeder Röhre darin gebildet ist,
wobei der Lufteinlass (223) jeder Röhre eine erste geometrische Form aufweist und der Auslass (227) jeder Röhre eine zweite geometrische Form aufweist, die sich von der ersten geometrischen Form unterscheidet, und
wobei eine Gesamteinlassfläche (232) der Vielzahl von Vormischröhren an der stromaufwärtigen Fläche größer ist als eine Gesamtauslassfläche (236) der Vielzahl von Vormischröhren an der stromabwärtigen Fläche, sodass die Vielzahl von Vormischröhren an der stromaufwärtigen Fläche relativ voneinander beabstandet sind und an der stromabwärtigen Fläche dichter gepackt sind.

2. Brennkammersektion nach Anspruch 1, wobei die Gesamtauslassfläche (236) eine längliche Form aufweist, die sich in einer Strömungsrichtung des Stroms von Verbrennungsprodukten erstreckt.

3. Brennkammersektion nach Anspruch 2, wobei die Anzahl von Vormischröhren (220) in dem zumindest einen Mikromischer-Einspritzer direkt einer Länge der länglichen Gesamtauslassfläche (236) entspricht und ein erster Auslass, der stromabwärts in der Strömungsrichtung des Stroms von Verbrennungsprodukten angeordnet ist, relativ zu einem zweiten Auslass ein tieferes Eindringen des Brennstoff/Luft-Gemisches in den Strom von Verbrennungsprodukten erreicht.

4. Brennkammersektion nach Anspruch 3, wobei der zumindest eine Mikromischer-Einspritzer gestaltet ist, sodass je höher die Anzahl von Vormischröhren (220) im Mikromischer-Einspritzer ist, umso tiefer das Eindringen des Brennstoff/Luft-Gemisches in den Strom von Verbrennungsprodukten ist.

5. Brennkammersektion nach einem der vorstehenden Ansprüche, wobei die stromabwärtige Fläche (209) eine längliche Struktur aufweist, die gestaltet ist, sich in einer Strömungsrichtung der Verbrennungsprodukte zu erstrecken.

6. Brennkammersektion nach einem der vorstehenden Ansprüche, wobei der Lufteinlass (223) jeder Röhre der Vielzahl von Vormischröhren eine nicht geradlinige Form aufweist.

7. Brennkammersektion nach Anspruch 6, wobei der Lufteinlass (223) jeder Röhre der Vielzahl von Vormischröhren eine bogenförmige Form aufweist.

8. Brennkammersektion nach einem der vorstehenden Ansprüche, wobei der Auslass (227) jeder Röhre der Vielzahl von Vormischröhren eine nicht kreisförmige Form aufweist.

9. Brennkammersektion nach Anspruch 8, wobei der Auslass (227) jeder Röhre der Vielzahl von Vormischröhren eine geradlinige Form aufweist.

10. Brennkammersektion nach einem der Ansprüche 1 bis 6, wobei der Lufteinlass (223) jeder Röhre der Vielzahl von Vormischröhren eine kreisförmige Form aufweist und der Auslass jeder Röhre eine geradlinige Form aufweist.

11. Brennkammersektion nach Anspruch 10, wobei jede Röhre (220) einen Übergangsabschnitt (224) aufweist, entlang dem die Röhre von einer kreisförmigen Form zu einer geradlinigen Form übergeht.

12. Brennkammersektion nach einem der vorstehenden Ansprüche, wobei unmittelbar benachbarte Röhren der Vielzahl von Vormischröhren (220) am Auslass (227) jeder Röhre durch eine gemeinsame Wand begrenzt sind, sodass kein Raum zwischen den unmittelbar benachbarten Röhren am Auslass jeder Röhre vorhanden ist.

13. Brennkammersektion nach einem der vorstehenden Ansprüche, wobei der zumindest eine Mikromischer-Einspritzer weiter einen Körper (205) umfasst, dessen stromaufwärtige Fläche (207) an seinem ersten Ende und stromabwärtige Fläche (209) an einem gegenüberliegenden zweiten Ende ist, wobei sich der Körper von der stromaufwärtigen Fläche zur stromabwärtigen Fläche verjüngt.

## Revendications

1. Section de chambre de combustion, comprenant :
un système de combustion primaire (22) générant un courant de produits de combustion ; et
un système de combustion secondaire (24) situé en aval du système de combustion primaire, **caractérisée en ce que** le système de combustion secondaire inclut :
au moins un micromélangeur injecteur (200) pour délivrer un mélange carburant/air dans le courant de produits de combustion, l'au moins un micromélangeur injecteur comprenant :
un plénum de carburant (230) pour recevoir une alimentation de carburant ;
une pluralité de tubes de prémélange (220) se prolongeant à partir du plénum de carburant, chaque tube ayant une entrée d'air (223) à une extrémité d'admission du tube et une sortie (227) à une extrémité d'évacuation du tube, l'entrée d'air de chaque tube étant configurée pour recevoir une alimentation d'air, chaque tube ayant une pluralité d'orifices pour carburant formés dedans pour recevoir l'alimentation de carburant à des fins de mélange avec l'air dans le tube ; et
une face amont (207) ayant l'entrée de chaque tube formée dedans, et une face aval (209) ayant la sortie de chaque tube formée dedans,
dans laquelle l'entrée d'air (223) de chaque tube présente une première forme géométrique et la sortie (227) de chaque tube présente une seconde forme géométrique qui est différente de la première forme géométrique, et
dans laquelle une surface d'entrée globale (232) de la pluralité de tubes de prémélange sur la face amont est plus grande qu'une surface de sortie globale (236) de la pluralité de tubes de prémélange sur la face aval de sorte que la pluralité de tubes de prémélange sont relativement espacés sur la face amont et plus densément serrés sur la face aval.

2. Section de chambre de combustion selon la revendication 1, dans laquelle la surface de sortie globale (236) présente une forme allongée se prolongeant dans une direction d'écoulement du courant de produits de combustion.

3. Section de chambre de combustion selon la revendication 2, dans laquelle le nombre de tubes de prémélange (220) dans l'au moins un micromélangeur injecteur correspond directement à une longueur de la surface de sortie globale allongée (236), et une première sortie agencée en aval dans la direction d'écoulement du courant de produits de combustion par rapport à une seconde sortie permet une pénétration plus profonde du mélange carburant/air dans le courant de produits de combustion.

4. Section de chambre de combustion selon la revendication 3, dans laquelle l'au moins un micromélangeur injecteur est configuré de façon que plus le nombre de tubes de prémélange (220) dans le micromélangeur injecteur est grand, plus la pénétration du mélange carburant/air dans le courant de produits de combustion est profonde.

5. Section de chambre de combustion selon l'une quelconque des revendications précédentes, dans laquelle la face aval (209) présente une structure allongée configurée pour se prolonger dans une direction d'écoulement des produits de combustion.

6. Section de chambre de combustion selon l'une quelconque des revendications précédentes, dans laquelle l'entrée d'air (223) de chaque tube de la pluralité de tubes de prémélange présente une forme non rectiligne.

7. Section de chambre de combustion selon la revendication 6, dans laquelle l'entrée d'air (223) de chaque tube de la pluralité de tubes de prémélange présente une forme arquée.

8. Section de chambre de combustion selon l'une quelconque des revendications précédentes, dans laquelle la sortie (227) de chaque tube de la pluralité de tubes de prémélange présente une forme non circulaire.

9. Section de chambre de combustion selon la revendication 8, dans laquelle la sortie (227) de chaque tube de la pluralité de tubes de prémélange présente une forme rectiligne.

10. Section de chambre de combustion selon l'une quelconque des revendications 1 à 6, dans laquelle l'entrée d'air (223) de chaque tube de la pluralité de tubes de prémélange présente une forme circulaire et la sortie de chaque tube présente une forme rectiligne.

11. Section de chambre de combustion selon la revendication 10, dans laquelle chaque tube (220) possède une partie de transition (224) le long de laquelle le tube passe d'une forme circulaire à une forme rectiligne.

12. Section de chambre de combustion selon l'une quelconque des revendications précédentes, dans laquelle des tubes immédiatement adjacents de la pluralité de tubes de prémélange (220) sont délimités par une paroi commune au niveau de la sortie (227) de chaque tube de sorte qu'aucun espace n'existe entre les tubes immédiatement adjacents au niveau de la sortie de chaque tube.

13. Section de chambre de combustion selon l'une quelconque des revendications précédentes, ledit au moins un micromélangeur injecteur comprenant en outre un corps (205) ayant la face amont (207) à une première extrémité de celui-ci et la face aval (209) à une seconde extrémité opposée de celui-ci, le corps se rétrécissant à partir de la face amont vers la face aval.
